# EUROPEAN PATENT SPECIFICATION

(11) **EP 1 793 409 B1**
(45) Date of publication and mention of the grant of the patent: **09.07.2008**
(21) Application number: 06123233.6
(22) Date of filing: 31.10.2006
(51) Int. Cl.: H01J 29/04, H01J 1/304

(54) **Electron emission source protected by protecting layer and electron emission device including the same**
Elektronenquelle geschützt durch eine Schutzschicht und einen Elektronenemitter mit der Elektronenquelle
Source d'émission d'électrons protégée par une couche protectrice et dispositif d'émission d'électrons avec une telle source

(30) Priority: 31.10.2005 KR 20050103458
(43) Date of publication of application: 06.06.2007
(73) Proprietor: Samsung SDI Co., Ltd., Suwon-si Gyeonggi-do (KR)
(72) Inventor: Moon, Jong-Woon c/o Samsung SDI Co., Ltd, Gyeonggi-do (KR)
(74) Representative: Hengelhaupt, Jürgen

(56) References cited:
- EP-A1- 0 905 737
- WO-A-00/73203
- US-A1- 2003 197 456
- US-A1- 2004 046 755
- US-A1- 2004 263 044

## Description

### BACKGROUND OF THE INVENTION

### 1. Field of the Invention

Aspects of the present invention relate to an electron emission source and an electron emission device including the same, and more particularly, to an electron emission source that is effectively protected from a change of an external environment and an electron emission device including the same.

### 2. Description of the Related Art

In electron emission devices, a voltage is applied between an anode having a fluorescent material deposited thereon and a cathode having an electron emission source deposited thereon to create an electric field. Electrons are emitted from the electron emission source and collide with the fluorescent material so that light is emitted.

Conventionally, carbonaceous materials containing carbon nanotubes are used as electron emission sources of electron emission devices. Since carbonaceous materials have conductivity, high electric field focusing effects, low work function, and excellent electron emission performance, a low voltage operation and large sized electron emission source can be realized. As a result, carbonaceous materials are considered as ideal electron emission sources of electron emission devices.

Such electron emission sources including carbon nanotubes can be produced using, for example, a carbon nanotube growing method using CVD, or a pasting method using an electron emission source forming composition containing carbon nanotubes. In particular, when an electron emission source is formed using the pasting method, the manufacturing costs decrease and the electron emission source can be produced in a large size. An electron emission source forming composition containing carbon nanotubes is disclosed in, for example, US Patent No. 6, 436,221.

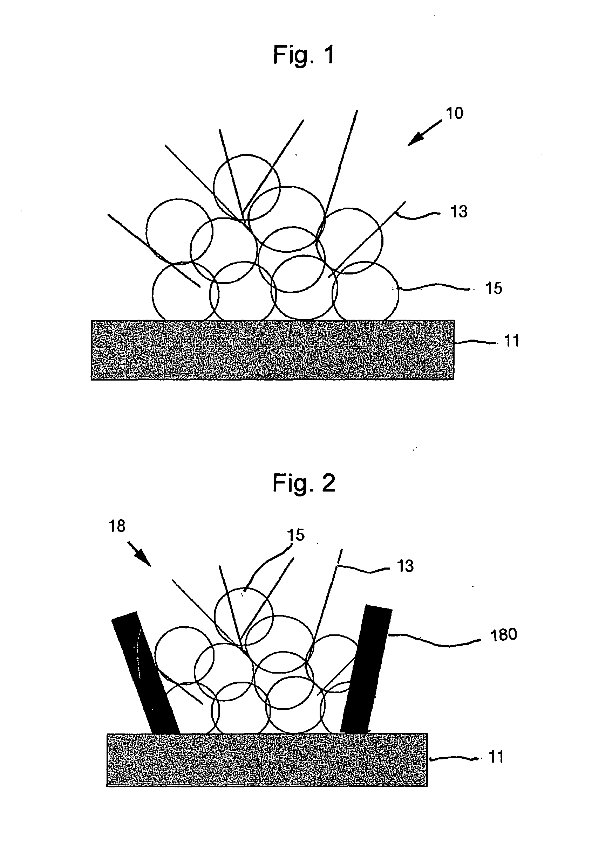

FIG. 1 schematically illustrates a conventional electron emission source 10 containing carbon nanotubes as a carbonaceous material. Referring to FIG. 1, an electron emission source 10 is formed on a substrate 11. The electron emission source 10 includes carbon nanotubes 13 and a metallic powder 15. For clarity, components of the electron emission source forming composition other than the carbon nanotubes 13 and the metallic powder 15 are not shown in FIG. 1. Conventionally, the metallic powder 15 decreases the contact resistance between the carbon nanotubes 13 and the substrate 11 or between individual carbon nanotubes 13. The large particle size of the metallic powder can contribute to arcing and as a result, the electron emission source may be damaged.

In particular, the degree of vacuum in a panel (chamber) of a conventional electron emission device decreases over time, and thus, outgassing occurs and the residual gas collides with electrons so that ions are generated. As a result, an electron emission source may sputter due to collision with such ions, and thus an electron emission device may be damaged and have a decreased lifetime. In order to prevent the degree of vacuum from being decreased, a getter can be installed in the device to remove the residual gas. However, the use of a getter does nothing to solve the problem of arcing of the metal powder as described above.

Furthermore, an example of an electron emission display device according to claim 1 can be found in US 2003/197456.

### SUMMARY OF THE INVENTION

According to a first aspect of the invention there is provided an electron emission display device according to claim 1. The electron display device comprises:
a first substrate;
a cathode formed on the first substrate; and
an electron emission source formed with its lower side on the cathode and comprising
   (i) a main body being composed of a basic material including a metallic powder and a carbonaceous material; and
   (ii) a protecting layer formed on an outer surface of the main body and encircling the outer perimeter of the main body to for the protective layer, wherein an electrical conductivity of the protecting layer is less than an electrical conductivity of the main body.
The protecting layer may have a thickness of 20 nm to 5 µm. The protecting layer may comprise at least one element or inorganic compound selected from the group consisting of Si, Ti, and C. In alternative, the protecting layer may comprise at least one organic material selected from the group consisting of a cresol novolac-based epoxy resin, a bisphenol-based epoxy resin, a urethane-based epoxy resin, and a polyimide-based resin. The carbonaceous material may be carbon nanotubes.
The electron emission device can be provided by means of a method of forming an electron emission device comprising a first substrate, a cathode electrode; an insulating layer, a gate electrode and an electron emission source, wherein the electron emission source has side surfaces that are provided with a protecting layer, the method comprising:
sequentially depositing the cathode electrode, the insulating layer and the gate electrode on the substrate;
forming a mask pattern on the gate electrode, wherein the mask pattern comprises a layer of photoresist sacrificial material;
etching portions of the gate electrode, insulating layer and cathode using the mask pattern to form an electron emission source hole;
applying a carbonaceous paste at the electron emission source hole, wherein the carbonaceous paste includes a carbonaceous material, a metallic powder and a resin;
hardening a portion of the carbonaceous paste to form an electron emission source; and
removing the mask pattern, wherein a portion of the photoresist sacrificial material contacts and reacts with the carbonaceous paste at side surfaces of the electron emission source and hardens to form a protecting layer thereon.
The photoresist sacrificial layer may comprise a material selected from the group consisting of a cresol novolac-based epoxy resin, a bisphenol-based epoxy resin, a urethane-based epoxy resin, and a polyimide-based resin. The resin of the carbonaceous paste may be a photosensitive photoresist resin and hardening of the portion of the applied carbonaceous paste to form the electron emission source is carried out by selectively irradiating the carbonaceous paste. The carbonaceous paste may include a solvent and the carbonaceous paste is applied to the electron emission source hole by printing and the printed carbonaceous paste is then hardened by baking. The resin of the carbonaceous paste may be a cellulose based resin, an acryl based resin, or a vinyl based resin, especially ethylcellulose, nitrocellulose, polyester acrylate, epoxy acrylate, urethane acrylate polyvinylacetate, polyvinyl butyral or polyvinyl ether. The solvent may be terpineol, butyl carbitol, butyl carbitol acetate, toluene, or 2,2,4-trimethyl-1,3-pentanediol monoisobutyrate. The baking may be carried out at 350 - 500 °C. The baking may be carried out in a nitrogen atmosphere including an oxygen gas, and the oxygen gas is present at a concentration of 1000 ppm or less.

### BRIEF DESCRIPTION OF THE DRAWINGS

The aspects and/or advantages of the invention will become apparent and more readily appreciated from the following description of the embodiments, taken in conjunction with the accompanying drawings of which:
FIG. 1 is a schematic sectional view of a conventional electron emission source;
FIG. 2 is a schematic sectional view of an electron emission source in which a protecting layer is formed on side surfaces thereof according to an embodiment of the present invention;
FIG. 3 is a sectional view of an electron emission device according to an embodiment of the present invention;
FIG. 4 is an enlarged view of the electron emission device shown in FIG. 3; and
FIG. 5 is a SEM image of an electron emission source according to an embodiment of the present invention.

### DETAILED DESCRIPTION OF THE EMBODIMENTS

Reference will now be made in detail to the present embodiments of the present invention, examples of which are illustrated in the accompanying drawings, wherein like reference numerals refer to the like elements throughout. The embodiments are described below in order to explain the present invention by referring to the figures.

An electron emission source according to an embodiment of the present invention is formed on a substrate, and a protective layer is formed on side surfaces of the electron emission source. FIG. 2 is a sectional view of an electron emission source according to an embodiment of the present invention. Referring to FIG. 2, an electron emission source 18 is formed on a substrate 11. The electron emission source 18 includes a carbonaceous material, such as a carbon nanotubes 13, and a metallic powder 15. As described above, the protective layer 180 according to an embodiment of the present invention is formed on side surfaces of the electron emission source 18. As used herein, the term "side surfaces" may include a single surface forming a perimeter around an electron emission source. The protecting layer 180 protects the electron emission source from the external environment, and maintains the shape of the electron emission source. As a result, in an electron emission display device, a much clearer screen is attained, and the electron emission source exhibits high stability.

The protecting layer 180 of the electron emission source 18 according to an embodiment of the present invention can be formed of any heat-resistant material. An electrical conductivity of the protecting layer 180 is less than an electrical conductivity of a main body of the electrode emission source, especially the metallic powder included in the main body. For example, the protecting layer 180 may be formed of an inorganic material, an organic material, or a mixture thereof. Examples of the inorganic material include the elements of Si, Ti, C, and their inorganic compounds as well as a mixture thereof. Examples of the organic material include a cresol novolac-based epoxy resin, a bisphenol-based epoxy resin, a urethane-based epoxy resin, and a polyimide-based resin

According to an embodiment of the present invention, the protecting layer 180 may be formed during a photoresist process that also forms the electron emission source. In particular, in order to form the electron emission source 18 on the substrate 11, a photoresist sacrificial layer is coated on other structures, such as an insulating layer or a gate electrode, so that the material that makes up the electron emission source 18 does not become permanently fixed to these other surfaces. Then, the electron emission source 18 is formed on the substrate 11 using an electron emission source forming paste. Next, the photoresist sacrificial layer is partially removed such that the photoresist sacrificial layer remains only around the electron emission source 18. The photoresist sacrificial layer that remains around the electron emission source then constitutes the protecting layer 180. Accordingly, a separate process for forming a protecting layer is not required and thus, the manufacturing costs can be kept low.

When the protecting layer 180 formed on side surfaces of the electron emission source 18 is too thick, the amount of material that serves as the electron emission source 18 decreases and thus fewer electrons are discharged. On the other hand, when the protecting layer 180 is too thin, it may not sufficiently protect the electron emission source 18. Accordingly, the thickness of the protecting layer 180 may be in the range of 20 nm to 5 µm, or, for example, 50 nm to 3 µm.

The electron emission source 18, which is protected by the protecting layer 180, may be formed using any material having an acicular structure. For example, the electron emission source 18 may be formed using a carbonaceous material having a low work function and a high beta function. Examples of the carbonaceous material include carbon nanotubes (CNTs), graphite, diamond, a diamond phase carbon, and the like. Particularly, carbon nanotubes are suitable for a low voltage operation due to their excellent electron emission properties. Therefore, an electron emission device including an electron emission source 18 formed using carbon nanotubes can be easily produced in a large size.

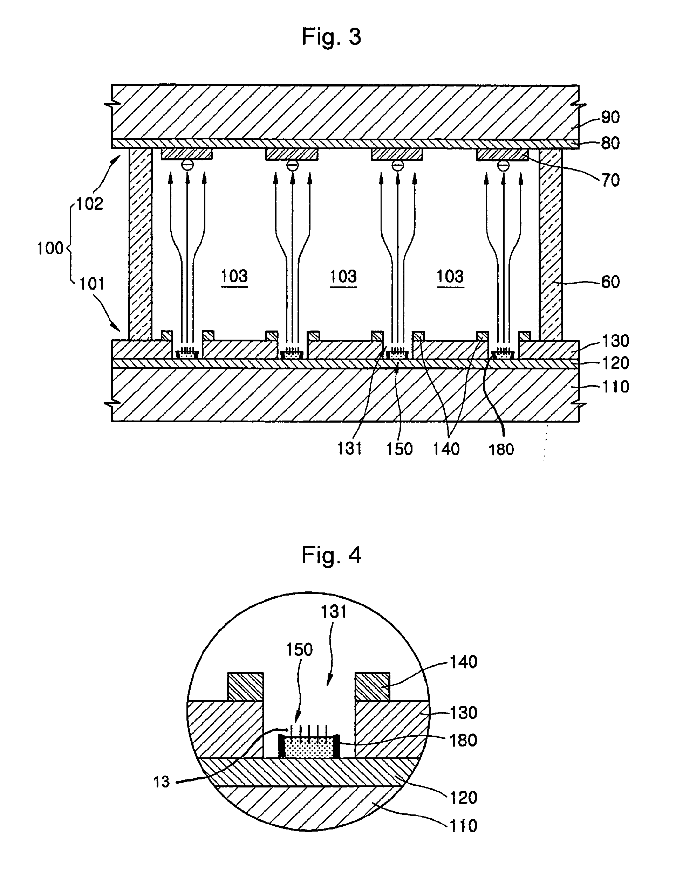

FIG. 3 is a sectional view of an electron emission device according to an embodiment of the present invention, and FIG. 4 is an enlarged view of the electron emission device shown in FIG. 3.

Referring to FIGS. 3 and 4, an electron emission device according to an embodiment of the present invention includes a first substrate 110, a cathode 120, gate electrodes 140, a first insulating layer 130 and electron emission sources 150. The electron emission sources 150 may include carbon nanotubes 13. A protecting layer 180 is formed on side surfaces of each of the electron emission sources 150.

The first substrate 110 is a flat panel having a predetermined thickness. The first substrate 110 may be a quartz glass substrate, a glass substrate containing a small amount of impurities, such as Na, a flat glass substrate, a glass substrate coated with SiO₂, an aluminum oxide substrate, or a ceramic substrate. In addition, the first substrate 110 can be formed of a flexible material when used to produce a flexible display apparatus.

The cathode 120 may extend in a direction on the first substrate 110, and may be formed of a conventional electrical conductive material, which can be a printed conductor containing Al, Ti, Cr, Ni, Au, Ag, Mo, W, Pt, Cu, Pd, or an alloy thereof; a printed conductor containing glass and metal, such as Pd, Ag, RuO₂, or Pd-Ag, or metal oxide; a transparent conductor, such as In₂O₃ or SnO₂; or a semi conductive material, such as polysilicon.

The gate electrodes 140 are interposed between the cathode 120 and the insulating layer 130, and may be formed of a conventional conductive material as used in the cathode 120.

The insulating layer 130 is interposed between the gate electrodes 140 and the cathode 120, and insulates the cathode 120 from the gate electrodes 140 to prevent a short between the cathode 120 and the gate electrodes 140.

The electron emission sources 150 are electrically connected to the cathode 120 and disposed lower than the gate electrodes 140. That is, the gate electrodes 140 are positioned above the insulating layer 130, and the electron emission sources 150 are not as tall as the thickness of the insulating layer 130. The protecting layer 180 is formed on side surfaces of each of the electron emission sources 150.

In the electron emission device 101 having the above-described structure, when a negative (-) voltage is applied to a cathode and a positive voltage (+) is applied to a gate electrode, electrons can be emitted from the electron emission source 150.

In particular, the electron emission device 101 can be used in a display device that generates visible rays to form an image. Such a display device may further include a second substrate 90 installed parallel to the first substrate 110 of the electron emission device 101, an anode 80 formed on the second substrate 90, and a fluorescent layer 70 formed on the anode 80.

In addition, in order to form an image, the cathode 120 may be disposed perpendicular to the gate electrodes 140 and electron emission source holes 131 may be formed where the gate electrodes 140 and the cathode 120 intersect each other so that electron emission sources 150 disposed in the electron emission holes 131 are separately addressable.

The electron emission device 101, including the first substrate 110, faces and is separated from the second substrate 90, including a front panel 102, at a predetermined interval, thereby forming one or more emission spaces. The interval between the electron emission device 101 and the front panel 102 is maintained by spacers 60, which may be composed of an insulating material. The spacers 60 may also serve to isolate separate emission spaces from each other.

The space formed by the electron emission device 101 and the front panel 102 is sealed with a frit, and air or the like contained in the inner space is discharged, thereby keeping the inner space in a vacuum state.

An operating process of an electron emission display device having such a structure will now be described in detail.

A negative (-) voltage is applied to the cathode 120 and a positive (+) voltage is applied to the gate electrode 140. As a result, electrons are emitted from the electron emission source 150 formed on the cathode 120. In addition, a strong positive (+) voltage is applied to the anode 80 to accelerate electrons that are emitted toward the anode 80. That is, when voltages are applied as described above, electrons are emitted from an acicular material that forms the electron emission source 150, move toward the gate electrode 140, and then are accelerated toward the anode 80. The electrons that have been accelerated toward the anode 80 collide with the fluorescent layer 70, so that visible rays are generated.

Methods of manufacturing an electron emission source and an electron emission device according to an embodiment of the present invention will now be described in detail. This embodiment is for illustrative purposes only and is not intended to limit the scope of the present invention. In the following description, it is to be understood that although the formation of a single electron emission source is described, the same process may be used for form a plurality of electron emission sources at the same time.

First, a first substrate 110, a cathode 120, an insulating layer 130 and a gate electrode 140 are sequentially deposited to predetermined thicknesses, respectively. These depositing processes may be performed through screen printing.

Then, a mask pattern having a predetermined thickness is formed on the gate electrode 140. The mask pattern, which is used to form an electron emission source hole, is formed through a photolithography process in which a photoresist (PR) sacrificial layer is coated and then a pattern is formed using ultraviolet (UV) light or an E-beam.

Next, by using the mask pattern, portions of the gate electrode 140, the insulating layer 130, and the cathode 120 are etched to form an electron emission source hole. Such an etching process can be a liquid etching process using an etching liquid, a dry etching process using an erosive gas, or a macro machining process using an ion beam, according to the materials that form the gate electrode 140, the insulating layer 130, and the cathode 120 or according to the thicknesses of the gate electrode 140, the insulating layer 130, and the cathode 120.

Subsequently, a carbonaceous paste containing a carbonaceous material is prepared. The carbonaceous paste includes a carbonaceous nanotube powder in which conventional semiconductive and conductive carbon nanotubes coexist. Such a carbonaceous paste that is used to form an electron emission source is coated on and inside the electron emission source hole through screen printing.

Then, portions of the carbonaceous paste that will become the electron emission source, are hardened.

Such a hardening process may vary according to presence or absence of a PR resin in the carbonaceous paste. When the carbonaceous paste includes a PR resin, an exposure process can be used. For example, when the carbonaceous paste includes a negative photosensitive PR resin that is hardened when exposed to light, a PR is coated through the PR process and then light is selectively radiated such that only portions of the carbonaceous paste that will be used as the electron emission source are hardened to form the electron emission source. Moreover, a portion of the PR sacrificial layer in contact with the carbonaceous paste also hardens.

Then, a development process is performed, and the residual carbonaceous paste that is not hardened and the PR sacrificial layer, except for the hardened portion contacting the hardened carbonaceous paste, are removed so that the only carbonaceous paste that remains on the substrate is the hardened carbonaceous paste that forms the electron emission source. The hardened portion of the photoresist sacrificial layer remains attached to the electron emission source and constitutes the protective layer.

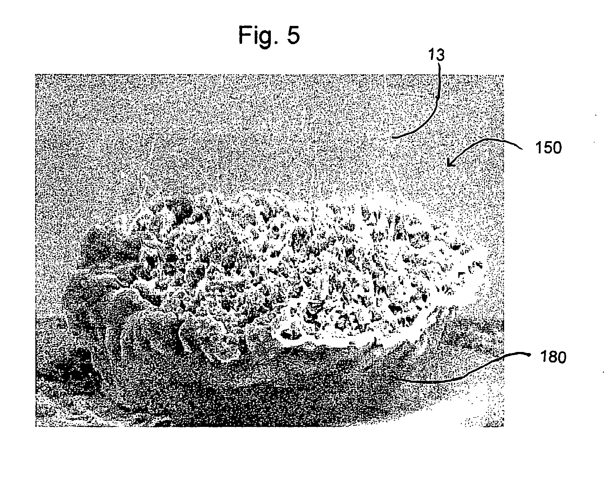

FIG. 5 is an SEM image of an electron emission source 150 formed as described above. Referring to FIG. 5, a protecting layer 180 formed of a cresol novolac epoxy resin having a thickness of about 50 nm is formed on side surfaces of the electron emission source 150 containing a carbonaceous material in the form of carbon nanotubes 13.

As stated above, when the PR sacrificial layer is removed, a portion of the PR sacrificial layer that reacts with and thus contacts the carbonaceous material used as the electron emission source is not removed and forms a protecting layer. Accordingly, a material used to form the PR sacrificial layer is selected considering whether the material is suitable for being a protecting layer.

Alternatively, when the carbonaceous paste does not include a photosensitive resin, other methods can be used to produce an electron emission source and a protective layer.

For example, when the carbonaceous paste does not include a photosensitive resin, a photolithography process using a photoresist pattern may be used. Particularly, a PR pattern is formed using a PR film, and then the carbonaceous paste is provided using the PR pattern through a printing method.

Such a printed carbonaceous paste is baked in a nitrogen atmosphere including an oxygen gas of 1000 ppm or less, for example, 10 ppm to 500 ppm. Through the baking process, performed in the presence of the oxygen gas atmosphere, the carbon nanotube of the carbonaceous paste becomes more adhesive to a substrate, a vehicle is evaporated to be removed, and other inorganic binders dissolve and are solidified, thereby increasing the durability of the electron emission source.

The baking temperature is dependent on evaporation temperature and time that the vehicle is contained in the carbonaceous paste. Conventionally, the baking temperature may be in the range of 350°C to 500°C, for example, 450°C. When the baking temperature is less than 350°C, the vehicle insufficiently evaporates. On the other hand, when the baking temperature is higher than 500°C, the manufacturing costs increase, and the substrate can be damaged.

Such a baked result is activated when required. For example, a solution that is hardened through heat treatment, such as an electron emission source surface treating agent containing a polyimide-based polymer, is coated on the baked result, and then a heat treatment is performed thereon. Then, a film that is formed as a result of the heat treatment is separated. Alternatively, in order to activate the baked result, an adhesive portion having an adhesive force is formed on the surface of a roller that operates by a predetermined operating source, and then a predetermined pressure is applied to the surface of the baked result using the roller. Through such an activation process, a nano-sized inorganic material is exposed at the surface of the electron emission source, or is vertically orientated.

The carbonaceous paste may further include, in addition to the carbon nanotube, a vehicle to control printability and viscosity of the carbonaceous paste. The vehicle may comprise a resin and a solvent.

The resin may include at least one material selected from a cellulose based resin, such as ethylcellulose, nitrocellulose, etc.; an acryl based resin, such as polyester acrylate, the epoxy acrylate, urethane acrylate, etc.; a vinyl based resin, such as polyvinylacetate, polyvinyl butyral, polyvinyl ether; and the like. However, the resin is not limited thereto. Some of the above-described resins may act as a photosensitive resin.

The solvent may include at least one material selected from terpineol, butyl carbitol (BC), butyl carbitol acetate (BCA), toluene, TEXANOL (a registered trademark of Eastman Chemical Company for 2,2,4-trimethyl-1,3-pentanediol monoisobutyrate) and the like. For example, the solvent may include terpineol.

When the amount of the solvent is too small or too great, the printability or flowabiltiy of the carbonaceous paste decreases. In particular, when the amount of the vehicle is too great, a long drying time is required.

The carbonaceous paste may further include at least one component selected from a photosensitive resin, a photo initiator, and a filler.

The photosensitive resin may be, but is not limited thereto, an acrylate based monomer, a benzophenone based monomer, an acetophenone based monomer, a thioxanthone based monomer, or the like. For example, the photosensitive resin is epoxy acrylate, polyester acrylate, 2,4-diethyloxanthone, 2,2- dimethoxy -2- phenyl acetophenone, or the like.

The photo initiator begins crosslinking of the photosensitive resin when the photosensitive resin is exposed. The photo initiator may be, but is not limited to, benzophenone, or the like.

The filler increases the conductivity of nano inorganic materials that are insufficiently adhered to the substrate. The filler may be, but is not limited thereto, Ag, Al, or the like.

As described above, an electron emission source can be formed using a carbonaceous paste. However, the electron emission source can also be formed by chemical vapor deposition (CVD).

An electron emission source according to the present invention includes a carbonaceous material, and is protected by a protecting layer formed on side surfaces thereof. As a result, damage to the electron emission source by the external environment is minimized, a much clearer screen is attained, and the electron emission source exhibits high stability. Accordingly, an electron emission device produced using the electron emission source is more reliable and has a long lifetime.

## Claims

1. An electron emission display device comprising:
a first substrate (110);
a cathode (120) formed on the first substrate (110); and
an electron emission source (150) formed with its lower side on the cathode (120) and comprising
(i) a main body being composed of a basic material including a metallic powder and a carbonaceous material; and
(ii) a protecting layer (180) **characterised in that** the protecting layer is formed on an outer surface perimeter of the main body and encircling the outer perimeter of the main body to form the protective layer (180), an electrical conductivity of the protecting layer (180) is less than an electrical conductivity of the main body.

2. The electron emission device of claim 1, wherein the protecting layer (180) has a thickness of 20 nm to 5 µm.

3. The electron emission device of any of the preceding claims, wherein the protecting layer (180) comprises at least one element or inorganic compound selected from the group consisting of Si, Ti, and C.

4. The electron emission device of claims 1 or 2, wherein the protecting layer (180) comprises at least one organic material selected from the group consisting of a cresol novolac-based epoxy resin, a bisphenol-based epoxy resin, a urethane-based epoxy resin, and a polyimide-based resin.

5. The electron emission device of any of the preceding claims, wherein the carbonaceous material is carbon nanotubes.

## Patentansprüche

1. Elektronenemissionsanzeigevorrichtung, aufweisend:
ein erstes Substrat (110);
eine Kathode (120), die auf dem ersten Substrat (110) ausgebildet ist; und
eine Elektronenemissionsquelle (150), die mit ihrer Unterseite auf der Kathode (120) ausgebildet ist und aufweist:
(i) einen Hauptkörper, der aus einem Grundmaterial besteht, das ein Metallpulver und ein kohlenstoffhaltiges Material aufweist, und
(ii) eine Schutzschicht (180), **dadurch gekennzeichnet, dass** die Schutzschicht auf einem Außenflächenumfang des Hauptkörpers ausgebildet ist und den Außenumfang des Hauptkörpers zur Ausbildung der Schutzschicht (180) umgibt, wobei eine elektrische Leitfähigkeit der Schutzschicht (180) geringer als eine elektrische Leitfähigkeit des Hauptkörpers ist.

2. Elektronenemissionsvorrichtung nach Anspruch 1, wobei die Schutzschicht (180) eine Dicke von 20 nm bis 5 µm aufweist.

3. Elektronenemissionsvorrichtung nach einem der vorhergehenden Ansprüche, wobei die Schutzschicht (180) zumindest ein Element oder eine anorganische Verbindung ausgewählt aus der Gruppe bestehend aus Si, Ti und C aufweist.

4. Elektronenemissionsvorrichtung nach Anspruch 1 oder 2, wobei die Schutzschicht (180) zumindest ein organisches Material ausgewählt aus der Gruppe bestehend aus einem Epoxidharz auf der Basis von Kresol-Novolak, einem Epoxidharz auf der Basis von Bisphenol, einem Epoxidharz auf der Basis von Urethan und einem Harz auf der Basis von Polyimid aufweist.

5. Elektronenemissionsvorrichtung nach einem der vorhergehenden Ansprüche, wobei das kohlenstoffhaltige Material Kohlenstoff-Nanoröhren ist.

## Revendications

1. Dispositif d'affichage à émission d'électrons, comportant:
un premier substrat (110);
une cathode (120) formée sur le premier substrat (110); et
une source (150) d'émission d'électrons dont le côté inférieur est formé sur la cathode (120) et comprend
(i) un corps principal étant composé d'un matériau de base comprenant une poudre métallique et un matériau carboné; et
(ii) une couche (180) de protection,
**caractérisé en ce que** la couche de protection est formée sur une circonférence de surface extérieure du corps principal et entoure la circonférence extérieure du corps principal pour former la couche (180) de protection, une conductivité électrique de la couche (180) de protection étant inférieure à une conductivité électrique du corps principal.

2. Dispositif d'émission d'électrons selon la revendication 1, dans lequel la couche (180) de protection a une épaisseur de 20 nm à 5 µm.

3. Dispositif d'émission d'électrons selon l'une des revendications précédentes, dans lequel la couche (180) de protection comprend au moins un élément ou un composé inorganique sélectionnés dans le groupe constitué de Si, Ti et C.

4. Dispositif d'émission d'électrons selon la revendication 1 ou 2, dans lequel la couche (180) de protection comprend au moins un matériau organique sélectionné dans le groupe constitué d'une résine époxy à base de crésol novolac, une résine époxy à base de bisphénol, une résine époxy à base d'uréthane, et une résine à base de polyimide.

5. Dispositif d'émission d'électrons selon l'une des revendications précédentes, dans lequel le matériau carboné est du matériau de nanotubes de carbone.
